# EUROPÄISCHE PATENTSCHRIFT

(11) **EP 3 650 246 B1**
(45) Veröffentlichungstag und Bekanntmachung des Hinweises auf die Patenterteilung: **08.01.2025**
(21) Anmeldenummer: 18205723.2
(22) Anmeldetag: 12.11.2018
(51) Int. Cl.: B60C 1/00, C08K 3/04, C08K 3/36, C08K 5/54

(54) **SCHWEFELVERNETZBARE KAUTSCHUKMISCHUNG, VULKANISAT UND FAHRZEUGREIFEN**
SULPHUR CROSS-LINKABLE RUBBER MIXTURE, VULCANIZATE AND VEHICLE TYRE
MÉLANGE DE CAOUTCHOUC RÉTICULABLE AU SOUFRE, CAOUTCHOUC VULCANISÉ ET PNEUMATIQUE DE VÉHICULE

(43) Veröffentlichungstag der Anmeldung: 13.05.2020
(73) Patentinhaber: Continental Reifen Deutschland GmbH, 30175 Hannover (DE)
(72) Erfinder: Schwekendiek, Kirsten, 31515 Wunstorf (DE); Jungk, Juliane, 65719 Hofheim-Lorsbach (DE); Recker, Carla, 30167 Hannover (DE); Müller, Norbert, 29336 Nienhagen (DE)
(74) Vertreter: Continental Corporation

(56) Entgegenhaltungen:
- JP-A- 2011 225 730
- JP-A- 2012 158 679
- US-A1- 2010 036 018
- US-B2- 7 625 965

## Beschreibung

Die Erfindung betrifft eine schwefelvernetzbare Kautschukmischung, ein Vulkanisat und einen Fahrzeugreifen.

Die Kautschukzusammensetzung des Laufstreifens bestimmt in hohem Maße die Fahreigenschaften eines Reifens, insbesondere eines Fahrzeugluftreifens. Ebenso sind die Kautschukmischungen, die in Riemen, Schläuchen und Gurten Verwendung vor allem in den mechanisch stark belasteten Stellen finden, für Stabilität und Langlebigkeit dieser Gummiartikel im Wesentlichen verantwortlich. Daher werden an diese Kautschukmischungen für Fahrzeugluftreifen, Gurte, Riemen und Schläuche sehr hohe Anforderungen gestellt.

Durch den teilweisen oder vollständigen Ersatz des Füllstoffes Ruß durch Kieselsäure in Kautschukmischungen wurden z.B. die Fahreigenschaften eines Reifens in den vergangenen Jahren insgesamt auf ein höheres Niveau gebracht. Die bekannten Zielkonflikte der sich gegensätzlich verhaltenden Reifeneigenschaften bestehen allerdings auch bei kieselsäurehaltigen Laufstreifenmischungen weiterhin. So zieht eine Verbesserung des Rollwiderstandsverhaltens weiterhin in der Regel eine Verschlechterung des Abriebverhaltens nach sich. Diese Eigenschaften sind auch bei technischen Gummiartikeln, wie Gurte, Riemen und Schläuche, ein wichtiges Qualitätskriterium.

Um diese Zielkonflikte zu lösen, sind schon vielfältige Ansätze verfolgt worden. So hat man beispielsweise unterschiedlichste, auch modifizierte, Polymere, Weichmacher und hochdisperse Füllstoffe für Kautschukmischungen eingesetzt und man hat versucht, die Vulkanisateigenschaften durch Modifikation der Mischungsherstellung zu beeinflussen.

In kieselsäurehaltigen Kautschukmischungen werden Organosilane eingesetzt, um die Kieselsäure zu hydrophobieren und dadurch die Verbindung zwischen Füllstoff und Polymer herzustellen. Hierzu ist es notwendig, dass die Kieselsäure innerhalb der Kautschukmischung eine gute Verteilung hat, d.h. dass sie gut dispergierbar ist. Insbesondere von Kieselsäuren, welche eine relativ hohe spezifische Oberfläche besitzen, ist bekannt, dass sie sehr schwer in Kautschukmischungen dispergierbar sind. Polysulfidische Organosilane werden an das Polymer gebunden. Verschiedene Silane haben dabei allerdings unterschiedlichen Einfluss auf die physikalischen Eigenschaften der Kautschukmischung. So ist beispielsweise aus WO2008083242A1 bekannt, dass die dort beschriebenen Silane mit cyclischen Einheiten, so genannte "silated core polysulfides" (SCP) zwar das Abriebverhalten verbessern, gleichzeitig aber keinen Einfluss auf das Rollwiderstandsverhalten haben. Im Vergleich zu den klassischen multimeren Schwefelsilanen, wie beispielsweise Bis(triethoxysilylpropyl)-disulfid (TESPD) und Bis(triethoxysilylpropyl)tetrasulfid (TESPT), verbessern monomere Silane, wie beispielsweise Mercaptosilane, zwar das Rollwiderstandsverhalten, gehen jedoch mit einer stark verschlechterten Prozessierbarkeit sowie verringertem Nassgriffverhalten und stärkerem Abriebsverlust einher. Geschützte Mercaptosilane, d.h. Mercaptosilane bei denen die Mercaptogruppe geblockt wird, verbessern den Rollwiderstand lediglich leicht auf Kosten des Nassgriffs und des Abriebs, wobei allerdings die Steifigkeit, d.h. das Handlingpotential, sinkt. Der Einsatz eines Systems aus Kieselsäure und Silan ist in Mischungen, welche als einziges Polymer oder als Hauptpolymerkomponente, d.h. einen Anteil von mehr als 50 phr, Naturkautschuk besitzen, aufgrund hoher Abriebsverluste und geringerer Verstärkung gegenüber Mischungen mit Ruß als einzigen oder Hauptfüllstoff begrenzt. In US 7,625,965 B2 ist eine Kautschukmischung mit 100 phr Naturkautschuk beschrieben, welche mehr als 50 phr Kieselsäure und ein Alkoxysilan mit einer Benzylchlorid-Einheit enthält. Hierbei zeigt sich allerdings, dass auch ein derartiges Silan in Kautschukmischungen mit mehr als 50 phr Kieselsäure und 3 phr Ruß noch Schwächen hinsichtlich des Rollwiderstandsverhaltens besitzt.

JP 2012-158679 A offenbart eine Kautschukmischung umfassend ein Silan der allgemeinen Formel (R¹R²R³Si-)ₘXₙ(-R⁴-Y)ᵣ.

JP 2011-225730 A offenbart eine Kautschukmischung umfassend ein organisches Silan der allgemeinen Formel R¹R²R³Si-R⁴-R⁵-CR⁶₍₃₋ₘ₎-Xₘ.

US 7 625 965 B2 offenbart eine Kautschukmischung umfassend ein Silan der allgemeinen Formel [X¹X²X³Si-]_{d}(G)ₐ[-Y-(CR₃₋ₑ-Zₑ)_{b}]_{c}.

US 2010/036018 A1 offenbart eine Kautschukmischung umfassend ein halogenhaltiges Aralkylsilan der allgemeinen Formel X¹X²X³Si-C(R¹)₂₋ₐ(Z¹ₐ)-G-(CR_{3-c}-Z²_{c})_{b}.

Der Erfindung liegt daher die Aufgabe zu Grunde, eine kieselsäurehaltige Kautschukmischung bereitzustellen, die das Eigenschaftsniveau, insbesondere umfassend Rollwiderstandsverhalten, Abrieb und Verstärkungswirkung verbessert, während die weiteren physikalischen Eigenschaften auf annähernd gleichem Niveau verbleiben.

Gelöst wird die Aufgabe erfindungsgemäß durch die schwefelvernetzbare Kautschukmischung gemäß Anspruch 1.

Überraschenderweise wurde gefunden, dass eine derartige Kautschukmischung ein verbessertes Eigenschaftsniveau aufweist und dabei insbesondere ein verbessertes Rollwiderstandsverhalten und insbesondere eine optimierte Verstärkungswirkung aufzeigt, ohne die weiteren physikalischen Eigenschaften negativ zu beeinflussen.

Ein weiterer Gegenstand der vorliegenden Erfindung ist ein Vulkanisat wenigstens einer erfindungsgemäßen Kautschukmischung.

Ein weiterer Gegenstand der vorliegenden Erfindung ist ein Fahrzeugreifen, der wenigstens ein erfindungsgemäßes Vulkanisat der erfindungsgemäßen Kautschukmischung in wenigstens einem Bauteil aufweist. Bevorzugt weist der Fahrzeugreifen das wenigstens eine Vulkanisat zumindest im Laufstreifen auf.

Das erfindungsgemäße Vulkanisat und der erfindungsgemäßen Fahrzeugreifen zeichnen sich durch eine Verbesserung im Rollwiderstandsverhalten aus. Gleichzeitig weisen sie ein sehr gutes Handling-Verhalten und ein sehr gutes Abriebniveau auf.

Bei zweigeteilten Laufstreifen (oberer Teil: Cap und unterer Teil: Base) kann die erfindungsgemäße Kautschukmischung sowohl für die Cap als auch für die Base verwendet werden. Bevorzugt weist wenigstens die Cap oder wenigstens die Base oder wenigstens die Cap und die Base wenigstens ein erfindungsgemäßes Vulkanisat der erfindungsgemäßen Kautschukmischung auf.

Die erfindungsgemäße Kautschukmischung ist ferner auch für Laufstreifen geeignet, die aus verschiedenen nebeneinander und/oder untereinander angeordneten Laufstreifenmischungen bestehen (Multikomponentenlaufstreifen).

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Die erfindungsgemäße Kautschukmischung ist ferner auch für andere Bauteile von Fahrzeugreifen geeignet, wie z. B. insbesondere dem Hornprofil, sowie für innere Reifenbauteile.

Die erfindungsgemäße Kautschukmischung ist ferner auch für andere technische Gummiartikel, wie z. B. Bälge, Förderbänder, Luftfedern, Gurte, Riemen oder Schläuche, sowie Schuhsohlen geeignet.

Ein weiterer Gegenstand der vorliegenden Erfindung ist die Verwendung der erfindungsgemäßen Kautschukmischung zur Herstellung eines Gummiartikels, insbesondere einer Luftfeder, eines Balgs, Förderbands, Gurtes, Riemens, Schlauchs, Gummibands, Profils, einer Dichtung, einer Membran, taktilen Sensoren für medizinische Anwendungen oder Roboteranwendungen, oder einer Schuhsohle oder Teilen davon.

Im Folgenden werden die Bestandteile der erfindungsgemäßen schwefelvernetzbaren Kautschukmischung näher beschrieben. Sämtliche Ausführungen gelten auch für das erfindungsgemäße Vulkanisat und den erfindungsgemäßen Fahrzeugreifen, der wenigstens ein erfindungsgemäßes Vulkanisat der erfindungsgemäßen Kautschukmischung in wenigstens einem Bauteil aufweist.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol. Die in dieser Schrift verwendete Angabe phf (parts per hundred parts of filler by weight) ist dabei die in der Kautschukindustrie gebräuchliche Mengenangabe für

Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Erfindungsgemäß ist die Kautschukmischung schwefelvernetzbar und enthält hierzu wenigstens einen Dienkautschuk.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei bevorzugt ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz. Dabei finden die dem Fachmann für diese Kautschuke bekannten - im Hinblick auf Füllstoffe, Weichmacher, Vulkanisationssysteme und Zuschlagstoffe besonderen - Mischungszusammensetzungen bevorzugte Anwendung.

Die Kautschukmischung ist insbesondere für Fahrzeugreifen geeignet, wobei sie prinzipiell in jedem Bauteil verwendet werden kann, wie insbesondere dem Laufstreifen, der Seitenwand, dem Hornprofil, sowie in sonstigen sogenannten Body-Bauteilen.

Vorzugsweise ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR), emulsionspolymerisiertem Styrol-Butadien-Kautschuk (ESBR), Butylkautschuk (IIR) und Halobutylkautschuk.

Gemäß einer besonders bevorzugten Ausführungsform der Erfindung ist der Dienkautschuk ausgewählt aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR). Eine derartige Kautschukmischung ist insbesondere für den Laufstreifen von Fahrzeugreifen geeignet.

Gemäß einer besonders vorteilhaften Ausführungsform der Erfindung enthält die Kautschukmischung wenigstens ein natürliches Polyisopren und zwar bevorzugt in Mengen von 2 bis 100 phr, und gemäß einer besonders vorteilhaften Ausführungsform der Erfindung 70 bis 100 phr. Hiermit werden eine besonders gute Prozessierbarkeit der erfindungsgemäßen Kautschukmischung und optimierte Reißeigenschaften erzielt.

Gemäß einer besonders vorteilhaften Ausführungsform der Erfindung enthält die Kautschukmischung wenigstens ein Polybutadien (Butadienkautschuk) und zwar bevorzugt in Mengen von 2 bis 100 phr, und gemäß einer besonders vorteilhaften Ausführungsform der Erfindung 5 bis 50 phr, ganz besonders bevorzugt 10 bis 25 phr. Hiermit werden besonders gute Abrieb- und Reißeigenschaften und eine gute Prozessierbarkeit bei geringem Hystereseverlust der erfindungsgemäßen Kautschukmischung erzielt.

Gemäß einer besonders vorteilhaften Ausführungsform der Erfindung enthält die Kautschukmischung wenigstens ein Styrol-Butadien-Kautschuk (SBR) und zwar bevorzugt in Mengen von 2 bis 100 phr, und gemäß einer besonders vorteilhaften Ausführungsform der Erfindung 25 bis 90 phr, ganz besonders bevorzugt 65 bis 90 phr. Hiermit wird eine gute Prozessierbarkeit bei geringem Hystereseverlust sowie guten Abrieb- und Reißeigenschaften der erfindungsgemäßen Kautschukmischung erzielt. Bevorzugt ist der SBR hierbei ein SSBR, womit sich optimierte Hysterese-Eigenschaften ergeben.

Gemäß einer besonders vorteilhaften Ausführungsform der Erfindung enthält die Kautschukmischung ein Polymerblend aus zweien oder mehreren der genannten Kautschuke NR, BR und SBR, bevorzugt SSBR, und zwar in sämtlichen denkbaren Kombinationen, wobei die Summe aller enthaltenen Kautschuke 100 phr ergibt.

Bei dem natürlichen und/oder synthetischen Polyisopren sämtlicher Ausführungsformen kann es sich sowohl um cis-1,4-Polyisopren als auch um 3,4-Polyisopren handeln. Polyisopren kann durch stereospezifische Polymerisation in Lösung mit Ziegler-Natta-Katalysatoren oder unter Verwendung von fein verteilten Lithiumalkylen erhalten werden. Bevorzugt ist allerdings die Verwendung von cis-1,4-Polyisoprenen mit einem cis 1,4 Anteil > 90 Gew.-%. Bei Naturkautschuk (NR) handelt es sich um ein solches cis-1,4 Polyisopren, wobei der cis-1,4-Anteil im Naturkautschuk ist größer 99 Gew.- %. Ferner ist auch ein Gemisch eines oder mehrerer natürlicher Polyisoprene mit einem oder mehreren synthetischen Polyisopren(en) denkbar.

Im Rahmen der vorliegenden Erfindung ist unter dem Begriff "Naturkautschuk" natürlich vorkommender Kautschuk zu verstehen, der von Hevea Gummibäumen und "Nicht-Hevea" Quellen gewonnen werden kann. Nicht-Hevea Quellen sind beispielsweise Guayule Sträucher und Löwenzahn wie beispielsweise TKS (Taraxacum kok-saghyz; Russischer Löwenzahn).

Falls in der erfindungsgemäßen Kautschukmischung Butadien-Kautschuk (= BR, Polybutadien) enthalten ist, kann es sich um alle dem Fachmann bekannten Typen handeln.

Darunter fallen u.a. die sogenannten high-cis- und low-cis-Typen, wobei Polybutadien mit einem cis-Anteil größer oder gleich 90 % als high-cis-Typ und Polybutadien mit einem cis-Anteil kleiner als 90 % als low-cis-Typ bezeichnet wird. Ein low-cis-Polybutadien ist z.B. Li-BR (Lithium-katalysierter Butadien-Kautschuk) mit einem cis-Anteil von 20 bis 50 %. Mit einem high-cis BR werden besonders gute Abriebeigenschaften sowie eine niedrige Hysterese der Kautschukmischung erzielt.

Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Erfindungsgemäß enthält die Kautschukmischung 5 bis 500 phr wenigstens einer Kieselsäure.

Bei der Kieselsäure kann es sich um die dem Fachmann bekannten Kieselsäuretypen, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 85 bis 320 m²/g und ganz besonders bevorzugt von 120 bis 235 m²/g, und eine CTAB-Oberfläche (gemäß ASTM D 3765) von 30 bis 400 m²/g, bevorzugt von 30 bis 330 m²/g, besonders bevorzugt von 80 bis 300 m²/g und ganz besonders bevorzugt von 115 bis 200 m²/g, aufweist. Derartige Kieselsäuren führen z. B. in Kautschukmischungen für Reifenlaufstreifen zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch hoch dispergierbare Kieselsäuren, so genannte HD-Kieselsäuren (z. B. Zeosil^{®} 1165 MP der Firma Solvay), zum Einsatz kommen.

Die erfindungsgemäße Kautschukmischung enthält gemäß einer bevorzugten Ausführungsform der Erfindung 5 bis 400 phr, bevorzugt 5 bis 300 phr, wenigstens einer Kieselsäure.

Gemäß einer bevorzugten Ausführungsform enthält die Kautschukmischung 10 bis 200 phr und ganz besonders bevorzugt 20 bis 180 phr, wiederum bevorzugt 20 bis 100 phr, wenigstens einer Kieselsäure.

Für den Fall, dass wenigstens zwei verschiedene Kieselsäuren, die sich z. B. durch ihre BET-Oberfläche unterscheiden, in der erfindungsgemäßem Kautschukmischung enthalten sind, beziehen sich die genannten Mengenangaben immer auf die Gesamtmenge aller enthaltenen Kieselsäuren.

Die Begriffe "Kieselsäure" und "Silika" werden im Rahmen der vorliegenden Erfindung synonym verwendet.

Die erfindungsgemäße Kautschukmischung enthält 5 bis 150 phr wenigstens eines Rußes, insbesondere wenigstens eines Industrierußes.

Als Ruße kommen alle der fachkundigen Person bekannten Rußtypen in Frage. In einer Ausführungsform hat der Ruß eine Jodzahl, gemäß ASTM D 1510, die auch als Jodadsorptionszahl bezeichnet wird, zwischen 30 und 250 g/kg, bevorzugt 30 bis 180 g/kg, besonders bevorzugt 40 bis 180 g/kg, und ganz besonders bevorzugt 40 bis 130 g/kg, und eine DBP-Zahl gemäß ASTM D 2414 von 30 bis 200 ml/100 g, bevorzugt 70 bis 200 ml/100g, besonders bevorzugt 90 bis 200 ml/100g.

Die DBP-Zahl gemäß ASTM D 2414 bestimmt das spezifische Absorptionsvolumen eines Rußes oder eines hellen Füllstoffes mittels Dibutylphthalat.

Die Verwendung eines solchen Rußtyps in der Kautschukmischung, insbesondere für Fahrzeugreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Rußtyp in der jeweiligen Kautschukmischung verwendet wird, es können aber auch verschiedene Rußtypen in die Kautschukmischung eingemischt werden.

Gemäß besonders vorteilhafter Ausführungsformen der Erfindung beträgt das Gewichtsverhältnis von Kieselsäuremenge zu Rußmenge 17:1 bis 1:20.

Gemäß einer vorteilhaften Ausführungsform der Erfindung enthält die Kautschukmischung 5 bis 20 phr wenigstens eines Rußes und 10 bis 100 phr, bevorzugt 20 bis 100 phr wenigstens einer Kieselsäure.

Die erfindungsgemäße Kautschukmischung kann weitere Füllstoffe enthalten, beispielsweise in Mengen von 0,1 bis 50 phr. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Eine Kautschukmischung enthält wenigstens ein Silan B mit der allgemeinen Summenformel I) oder II)

I) (R¹)ₒSi-(R²-)ₘ-A-C(R³₂)-X

II) (R¹)ₒSi-(R⁴-)ₖ-C(R³X)-A

wobei o gleich 1 oder 2 oder 3 sein kann und die Reste R¹ gleich oder verschieden voneinander sein können und ausgewählt sind aus C₁-C₁₀-Alkoxygruppen, C₆-C₂₀-Phenoxygruppen, C₂-C₁₀-cyclischen Dialkoxygruppen, C₂-C₁₀- Dialkoxygruppen, C₄-C₁₀- Cycloalkoxygruppen, C₆-C₂₀- Arylgruppen, C₁-C₁₀-Alkylgruppen, C₂-C₂₀- Alkenylgruppen, C₂-C₂₀- Alkinylgruppen, C₇-C₂₀- Aralkylgruppen, Halogeniden oder Alkylpolyethergruppe -O-(R⁶-O)ᵣ-R⁷, wobei die Reste R⁶ gleich oder verschieden sind und verzweigte oder unverzweigte, gesättigte oder ungesättigte, aliphatische, aromatische oder gemischt aliphatische/aromatische verbrückende C₁-C₃₀-Kohlenwasserstoffgruppe sind, r eine ganze Zahl von 1 bis 30 ist und die Reste R⁷ unsubstituierte oder substituierte, verzweigte oder unverzweigte terminale Alkyl-, Alkenyl-, Aryl- oder Aralkylgruppen sind, oder
zwei R¹ entsprechen einer Dialkoxygruppe mit 2 bis 10 Kohlenstoffatomen wobei dann o < 3 ist,
oder es können zwei oder mehr Silane gemäß Formel I) und/oder II) über Reste R¹ oder durch Kondensation verbrückt sein; und
wobei die Bedingung gilt, dass in Formel I) und II) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist;
und die Reste R² und R⁴ verzweigte oder unverzweigte, gesättigte oder ungesättigte, aliphatische, aromatische oder gemischt aliphatische/aromatische C₁-C₃₀-Kohlenwasserstoffgruppen sind, wobei die Indices k und m Werte von 0 oder 1 annehmen können;
und die Reste R³ innerhalb eines Moleküls gleich oder verschieden sein können und wie für R² definiert oder Wasserstoffatome sind;
und wobei A eine aromatische Gruppe ist;
und wobei X ausgewählt ist aus Halogeniden, Tosylat-, Mesylat- und Trifluormethansulfonat-Gruppen.

Das Silan mit der oben genannten Summenformel I) oder II) die Einheit -A-C(R³₂)-X bzw. -C(R³X)-A aufweist, wobei X eine Abgangsgruppe ist, die gemäß der Formeln I) oder II) an einem Kohlenstoffatomen benachbart zum Aromaten angeordnet ist; im Falle von A = Phenylen ist dies die Benzylische Position.

Sämtliche genannten Reste R¹ und Verbrückungen von einem oder mehreren Silanen über Reste R¹ können innerhalb einer Silyl-Gruppe miteinander kombiniert sein.

Für den Fall, dass zwei R¹ einer Dialkoxygruppe mit 2 bis 10 Kohlenstoffatomen entsprechen und dann o < 3 (o kleiner drei) ist, ist das Siliziumatom Teil eines Ringsystems.

Für den Fall, dass zwei Silane gemäß Formel I) und/oder II) miteinander verbrückt sind, teilen sie sich einen Rest R¹ oder sind durch Kombination zweier Si-R¹-Gruppen miteinander über ein Sauerstoffatom verknüpft. Auf diese Weise können auch mehr als zwei Silane aneinander verknüpft sein. Im Anschluss an die Synthese des Silans gemäß Formel I) und/oder II) ist es somit denkbar, dass zwei Silane gemäß Formel I) und/oder II) über ein Sauerstoffatom oder die Reste R¹ miteinander verbrückt werden. Auf diese Weise können auch mehr als zwei Silane aneinander verknüpft werden, wie beispielsweise über Dialkoxygruppen.

Die Kautschukmischung kann somit auch Oligomere, die durch Hydrolyse und Kondensation oder durch Verbrücken mittels Dialkoxygruppen als R¹ der Silane der Formel I) und/oder entstehen, enthalten.

Die Silane gemäß den Formeln I) und II) umfassen durch die Bedingung, dass in der Formel I) und II) in jeder (R¹)ₒSi-Gruppe wenigstens ein R¹ aus denjenigen oben genannten Möglichkeiten ausgewählt ist, bei der dieses R¹ i) über ein Sauerstoffatom an das Siliziumatom gebunden ist oder ii) ein Halogenid ist, jeweils wenigstens einen Rest R¹, der als Abgangsgruppe dienen kann.

Insbesondere sind dies somit Alkoxy-Gruppen, Phenoxy-Gruppen oder sämtliche andere der genannten Gruppen, die mit einem Sauerstoffatom an das Siliziumatom gebunden sind, oder Halogenide.

Es ist denkbar, dass die Reste R¹ Alkylgruppen mit 1 bis 10 Kohlenstoffatomen (C₁-C₁₀-Alkylgruppe) oder Alkoxygruppen mit 1 bis 10 Kohlenstoffatomen (C₁-C₁₀-Alkoxygruppe) oder Halogenide umfassen, besonders bevorzugt sind Alkoxygruppen mit 1 bis 10 Kohlenstoffatomen (C₁-C₁₀-Alkoxygruppe).

Gemäß einiger Ausführungsformen ist in jeder Silyl-Gruppe wenigstens ein R¹ eine C₁-C₁₀-Alkoxygruppe, bevorzugt C₁-C₆-Alkoxygruppe.

Gemäß einer weiteren Ausführungsform sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o gleich 3 ist. Aber auch bei Oligomeren oder im Fall, dass zwei R¹ eine Dialkoxy-Gruppe bilden, sind die übrigen Reste R¹ bevorzugt Alkylgruppen mit 1 bis 10 Kohlenstoffatomen oder Halogenide oder Alkoxygruppen mit 1 bis 10 Kohlenstoffatomen, bevorzugt 1 oder 2 Kohlenstoffatomen, also Methoxygruppen oder Ethoxygruppen, ganz besonders bevorzugt Ethoxygruppen.

Im Rahmen der vorliegenden Erfindung werden Ethoxygruppen in den Formeln der Silane mit EtO bzw. OEt abgekürzt dargestellt. Die beiden Schreibweisen verdeutlichen, dass Alkoxygruppen, wie Ethoxygruppen, über das Sauerstoffatom O an das Siliziumatom Si gebunden sind.

Prinzipiell können die Abkürzungen OEt und EtO aber im Rahmen der vorliegenden Erfindung synonym verwendet werden.

Gemäß weiterer Ausführungsformen ist X in den Formeln I) und II) ein Halogenid, und dabei bevorzugt Chlorid oder Bromid oder Iodid.

Gemäß einer Ausführungsform ist X in Formel I) und Formel II) Chlorid.

Hiermit wird die zugrunde liegende Aufgabe besonders gut gelöst.

Bei den aromatischen Gruppen A der Formeln I) und II) kann es sich prinzipiell um jede aromatische Gruppe handeln. Die aromatischen Gruppen A können hierbei Heteroatome enthalten und/oder an einem oder mehreren Atomen des aromatischen Gerüstes Substituenten R⁵ (für ein jeweiliges Wasserstoffatom) tragen, und zwar zusätzlich zu den formelgemäßen Substituenten.

Unter R⁵ werden zusätzliche Substituenten als Teil der aromatischen Gruppe A verstanden, die im Falle von zwei oder mehreren Substituenten unabhängig voneinander gleich oder verschieden sein können.

Denkbar ist es, dass die aromatischen Gruppen A ausgewählt sind aus der Gruppe bestehend aus Phenyl-, Naphthyl-, Anthryl-, Phenanthryl-, Pyridyl-, Pyridazyl-, Pyrimidyl, Pyrazyl-, Triazyl-, Chinolyl-, Pyrrolyl-, Furanyl-, Thiophenyl-, Pyrazolyl-, Imidazolyl-, Thiazolyl- und Oxazolyl-Resten sowie Derivaten der genannten Gruppen, wobei Derivate umfasst, dass die aromatische Gruppe einen oder mehrere zusätzliche Substituenten R⁵ trägt.

Der Einfachheit halber werden die genannten Gruppen so bezeichnet, wie im Fall einer einfachen Anbindung an diese Gruppen, selbst wenn die Gruppen innerhalb der Struktur, wie in jedem Fall in Formel I), mindestens zwei Verknüpfungen aufweisen. Im Fall von Phenyl- würde die Bezeichnung nach IUPAC "Phenylen-" lauten. Der Begriff "Phenyl-" umfasst aber im Rahmen der vorliegenden Erfindung sowohl terminale Phenylgruppen als auch Phenylengruppen. Analoges gilt für sämtliche andere genannten Gruppen, sofern nicht explizit anders ausgedrückt.

Der oder die Substituenten R⁵ in Formel II) umfassen jegliche denkbare Substituenten, wie insbesondere Alkyl-, Alkoxy-, Hydroxy-, Carboxy-, Amin-Gruppen oder -C(R³₂)-X-Gruppierungen oder Kohlenwasserstoffreste, die 1 bis 30 Kohlenstoffatome enthalten und Heteroatome und/oder Doppelbindungen und/oder weitere aromatische Gruppierungen enthalten können und/oder verzweigt sein können.

Die Verknüpfung der formelgemäßen Substituenten in Formel I), also -(R²)-Si(R¹)ₒ sowie -C(R³₂)-X, an der jeweiligen aromatischen Gruppe kann dabei über alle denkbaren Atome des aromatischen Gerüsts erfolgen. Bei einem monocyclischen Aromaten mit sechs Gerüstatomen wie einem Phenylenrest heißt das z. B., dass die formelgemäßen Substituenten in para-, meta- oder ortho- Position zueinander angeordnet sein können.

Analoges gilt für Formel II) für den Fall, dass wenigsten ein weiterer Substituent R⁵ vorhanden ist.

Gemäß einer weiteren Ausführungsform ist A in Formel I) ein Phenyl-Rest, also ein Benzolring. Hierbei sind -(R²)-Si(R¹)ₒ sowie -C(R³₂)-X bevorzugt in meta- oder para-Stellung zueinander angebracht.

Gemäß einer weiteren Ausführungsform ist A in Formel II) ein Phenyl-Rest, also ein Benzolring.

Gemäß einer weiteren Ausführungsform ist A in Formel II) ein mit R⁵ zusätzlich substituierter Phenyl-Rest, also ein substituierter Benzolring.

In diesem Fall sind (R¹)ₒSi-(R⁴-)ₖ-C(R³X)- und R⁵ bevorzugt in meta- oder para-Stellung zueinander angebracht.

Bevorzugt ist R⁵ -C(R³₂)-X, wobei R³ hierbei beide bevorzugt Wasserstoffatome und X bevorzugt ein Halogenid, bevorzugt Chlorid, ist.

Gemäß einer Ausführungsform ist in Formel I) m gleich 1, und damit der Rest R² vorhanden.

Gemäß einer Ausführungsform ist in Formel I) R² eine Alkylengruppe mit 1 bis 30 Kohlenstoffatomen, bevorzugt 1 bis 20 Kohlenstoffatomen, besonders bevorzugt 2 bis 10 Kohlenstoffatomen, ganz besonders bevorzugt 2 bis 8 Kohlenstoffatomen, beispielsweise und insbesondere 2 Kohlenstoffatomen und damit ein Ethylenrest.

Gemäß einer weiteren Ausführungsform ist in Formel II) k gleich 1, und damit der Rest R⁴ vorhanden.

Gemäß einer weiteren Ausführungsform ist in Formel II) R⁴ eine Alkylengruppe mit 1 bis 30 Kohlenstoffatomen, bevorzugt 1 bis 20 Kohlenstoffatomen, besonders bevorzugt 1 bis 10 Kohlenstoffatomen, ganz besonders bevorzugt 1 bis 8 Kohlenstoffatomen, beispielsweise und insbesondere 1 Kohlenstoffatom und damit ein Methylenrest, der zusammen mit dem formelgemäßen Rest -C(R³X)- einen substituierten Ethylenrest bildet.

Gemäß weiterer Ausführungsformen ist R³ in Formel II) oder wenigstens ein R³ in Formel I) ein Wasserstoffatom.

Besonders bevorzugt sind beide R³ in Formel I) Wasserstoffatome und die sterische Hinderung an der funktionellen Gruppe -C(R³₂)X somit besonders gering.

Gemäß einer Ausführungsform hat das Silan gemäß Formel I) die folgende Struktur gemäß Formel XI): 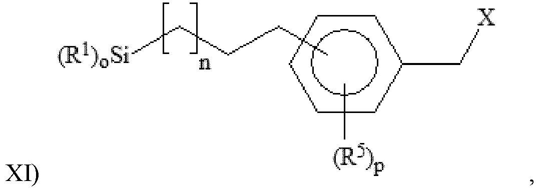 wobei n eine ganze Zahl von 0 bis 29 ist und R⁵ wie oben beschrieben definiert ist, und p Werte von 0 bis 4 annehmen kann, was bedeutet, dass der Substituent R⁵ mit p = 0 nicht vorhanden ist oder 1 oder 2 oder 3 oder 4 Substituenten R⁵ an unterschiedlichen Positionen des Benzolringes in einem Molekül XI) vorhanden sind.

Hierbei sind: A = Phenyl, also ein Benzolring, m = 1 und R² = Alkylen und beide R³ = Wasserstoffatome.

Gemäß einer weiteren Ausführungsform ist n in Formel XI) gleich 0, womit R² ein Ethylenrest ist.

Mit einem Silan gemäß Formel XI) wird der Zielkonflikt aus Verstärkungswirkung und Rollwiderstand auf einem besonders hohen Niveau gelöst, d. h. die Kautschukmischung liegt auf einem besonders hohen Eigenschaftsniveau. Gleichzeitig weist die Kautschukmischung mit einem Silan gemäß Formel XI) eine erhöhte Steifigkeit auf. Dies ist wiederum ein Indikator für ein verbessertes Handling-Verhalten.

Weitere beispielhafte Silane B gemäß Formel I) sind in den folgenden Strukturformeln abgebildet:

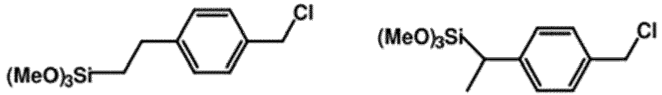

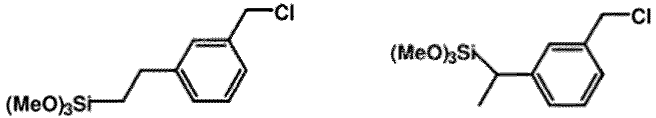

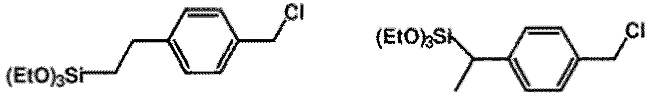

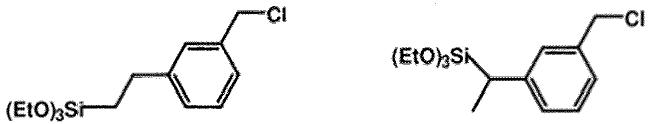

Gemäß der Erfindung enthält die erfindungsgemäße Kautschukmischung ein Gemisch eines Silans gemäß folgender Formel XIa) 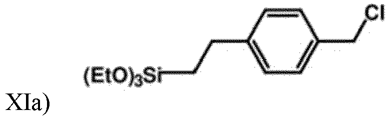 und
eines Silans gemäß folgender Formel XIb) 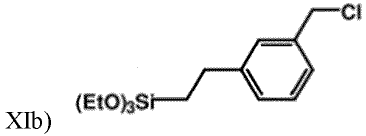
, bevorzugt im Gewichtsverhältnis 5:1 bis 1:5.

Gemäß einer weiteren Ausführungsform hat das Silan gemäß Formel II) die folgende Struktur gemäß Formel XII): 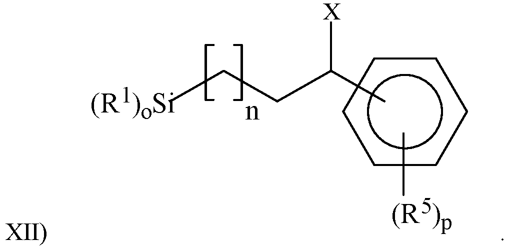 Hierbei sind die Gruppen und Indizes wie für Formel XI) definiert.

Gemäß einer weiteren Ausführungsform hat das Silan gemäß Formel II) die folgende Struktur gemäß Formel XIII): 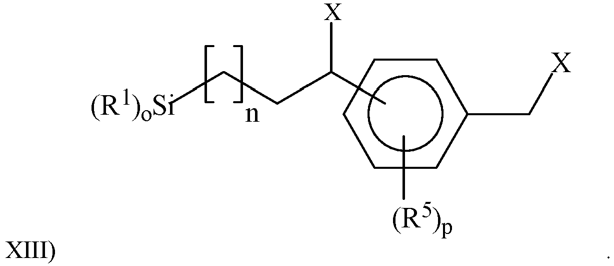 Hierbei sind die Gruppen und Indizes wie für Formel XI) definiert.

Weitere beispielhafte Silane B gemäß Formel II) sind in den folgenden Strukturformeln abgebildet:

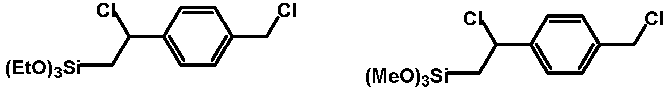

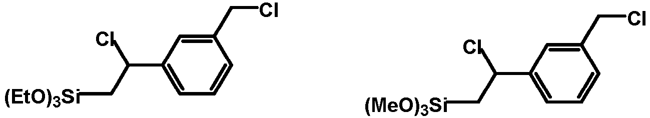

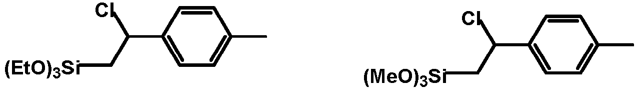

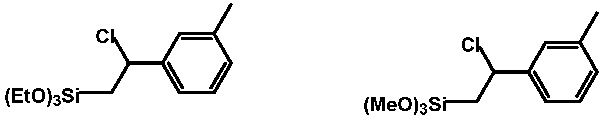

Die Herstellung der beschriebenen Silane B wird beispielsweise in US 7,625,965 B2 beschrieben.

Gemäß einer Ausführungsform enthält die Kautschukmischung zumindest ein Silan B gemäß Formel I).

Gemäß einer Ausführungsform enthält die Kautschukmischung zumindest ein Silan B gemäß Formel II).

Gemäß einer Ausführungsform enthält die Kautschukmischung zumindest ein Silan B gemäß Formel I) und zumindest ein Silan B gemäß Formel II).

Bevorzugt beträgt die Menge an Silan B 0,1 bis 30 phf, bevorzugt 1 bis 22 phf, besonders bevorzugt 2 bis 18,5 phf, ganz besonders bevorzugt 2 bis 10 phf.

Für den Fall, dass die Kautschukmischung zwei oder mehrere verschiedene Silane gemäß Formel I) und/oder II) enthält, beziehen sich die Mengenangaben auf die Gesamtmenge an enthaltenen Silanen gemäß Formel I) und II).

Es ist im Rahmen der vorliegenden Erfindung auch denkbar, dass das oben genannte Silan Bin Kombination mit einem oder mehreren Silanen aus dem Stand der Technik eingesetzt wird.

Die erfindungsgemäß enthaltenen Silane können auf einem Träger, beispielsweise Wachs, Polymer oder Ruß, aufgebracht sein, und in dieser Form der Kautschukmischung zugegeben sein. Die erfindungsgemäß enthaltenen Silane können auf einer Kieselsäure aufgebracht sein, wobei die Anbindung physikalisch oder chemisch erfolgt sein kann. Die Aufbringung der erfindungsgemäß enthaltenen Silane auf Kieselsäure verringert z.B. den Ausstoß von flüchtigen Nebenprodukten, wie Ethanol bei der Verwendung von Ethoxysubstituierten Silanen (R¹ = Ethoxy).

Weiterhin kann die Kautschukmischung weitere Aktivatoren und/oder Agenzien für die Anbindung von Füllstoffen, insbesondere Ruß, enthalten. Hierbei kann es sich beispielsweise um die z.B. in der EP 2589619 A1 offenbarte Verbindung S-(3-Aminopropyl)Thioschwefelsäure und/oder deren Metallsalze handeln, wodurch sich insbesondere bei der Kombination mit wenigstens einem Ruß als Füllstoff sehr gute physikalische Eigenschaften der Kautschukmischung ergeben.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie die der Familie der PPD (Phenylendiamine) und dabei z. B. N-Phenyl-N'-(1,3-dimethylbutyl)-p-phenylendiamin (6PPD), N,N`-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Wachse,
d) Kohlenwasserstoffharze, wie ggf. insbesondere Klebharze
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.

Der Weichmacher ist bevorzugt ausgewählt aus der Gruppe bestehend aus den oben genannten Weichmachern.

Der Weichmacher ist besonders bevorzugt ausgewählt aus der Gruppe bestehend aus Kohlenwasserstoffharzen, Flüssig-Polymeren und Mineralölen.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Gemäß einer bevorzugten Ausführungsform der Erfindung enthält die Kautschukmischung wenigstens ein Mineralölweichmacher, bevorzugt wenigstens TDAE und/oder RAE als Weichmacher. Hiermit ergeben sich besonders gute Prozessierbarkeiten, insbesondere eine gute Mischbarkeit der Kautschukmischung.

Gemäß einer bevorzugten Ausführungsform der Erfindung enthält die Kautschukmischung wenigstens ein Flüssig-Polymer als Weichmacher.

Gemäß einer bevorzugten Ausführungsform der Erfindung enthält die Kautschukmischung wenigstens ein Kohlenwasserstoffharz als Weichmacher.

Dem Fachmann ist klar, dass Kohlenwasserstoffharze Polymere sind, die aus Monomeren aufgebaut sind, wobei das Kohlenwasserstoffharz durch die Verknüpfung der Monomere zueinander formal aus Derivaten der Monomere aufgebaut ist. Diese Kohlenwasserstoffharze zählen im Rahmen der vorliegenden Erfindung jedoch nicht zu den Kautschuken. Der Begriff "Kohlenwasserstoffharze" umfasst im Rahmen der vorliegenden Anmeldung Harze, die Kohlenstoffatome und Wasserstoffatome aufweisen sowie optional Heteroatome, wie insbesondere Sauerstoffatome, aufweisen können. Das Kohlenwasserstoffharz kann ein Homopolymer oder ein Copolymer sein. Unter Homopolymer wird in der vorliegenden Anmeldung ein Polymer verstanden, welches gemäß Römpp Online Version 3.28 "aus Monomeren nur einer Art entstanden ist". Bei den Monomeren kann es sich um alle dem Fachmann bekannten Monomere von Kohlenwasserstoffharzen handeln, wie aliphatische C₅-Monomere, weitere ungesättigte Verbindungen, die kationisch polymerisiert werden können, enthaltend Aromaten und/oder Terpene und/oder Alkene und/oder Cycloalkene.

In einer bevorzugten Ausführungsform der Erfindung ist das Kohlenwasserstoffharz ausgewählt aus der Gruppe bestehend aus aliphatischen C₅-Harzen und Kohlenwasserstoffharzen aus alpha-Methylstyrol und Styrol.

Das Kohlenwasserstoffharz weist bevorzugt einen Erweichungspunkt gemäß ASTM E 28 (Ring und Ball) von 10 bis 180 °C, besonders bevorzugt von 60 bis 150 °C, ganz besonders bevorzugt von 80 bis 99 °C auf. Weiterhin weist das Kohlenwasserstoffharz bevorzugt ein Molekulargewicht Mw von 500 bis 4000 g/mol, bevorzugt von 1300 bis 2500 g/mol auf

Der Mengenanteil der Gesamtmenge an weiteren Zusatzstoffen beträgt bevorzugt 3 bis 150 phr, bevorzugt 3 bis 100 phr und besonders bevorzugt 5 bis 80 phr.

Im Gesamtmengenanteil der weiteren Zusatzstoffe kann Zinkoxid (ZnO) enthalten sein. Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Insbesondere bei der Verwendung der erfindungsgemäßen Kautschukmischung für die inneren Bauteile eines Reifens oder eines technischen Gummiartikels, welche direkten Kontakt zu vorhandenen Festigkeitsträgern haben, wird der Kautschukmischung in der Regel noch ein geeignetes Haftsystem, oft in Form von Klebharzen, zugefügt.

Die Vulkanisation wird bevorzugt in Anwesenheit von Schwefel und/oder Schwefelspendern und mit Hilfe von Vulkanisationsbeschleunigern durchgeführt, wobei einige Vulkanisationsbeschleuniger zugleich als Schwefelspender wirken können. Schwefel und/oder weitere Schwefelspender sowie ein oder mehrere Beschleuniger werden im letzten Mischungsschritt der Kautschukmischung zugesetzt. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern und/oder Polyetheramin-Beschleunigern.

Bevorzugt ist die Verwendung wenigstens eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert.Butyl-2-benzothiazylsulfenamid (TBBS).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z. B. Thiuramdisulfide, wie z. B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z. B. Dipentamethylenthiuramtetrasulfid (DPTT), und/oder Dithiophosphate, wie z. B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Die benötigte Menge an weiterem Schwefel in Form von elementarem Schwefel und/oder weiterem Schwefelspender richtet sich nach dem Einsatzgebiet der jeweiligen Kautschukmischung. Dem Fachmann sind die jeweiligen Mengen der Zudosierung bekannt. Bei der Zugabe von elementarem Schwefel betragen die Mengen im Fall einer Kautschukmischung für den Wulst von Fahrzeugreifen beispielsweise 0 bis 5 phr. Für Laufstreifen von Fahrzeugreifen, die in der Regel gegenüber dem Wulst einen geringeren Schwefelgehalt aufweisen, beträgt die Menge an zuzugebenden elementaren Schwefel bevorzugt 0 bis 4 phr.

Gemäß einer vorteilhaften Weiterbildung der Erfindung werden mehrere Beschleuniger eingesetzt.

Gemäß einer vorteilhaften Ausführungsform der Erfindung wird ein Sulfenamidbeschleuniger, besonders bevorzugt TBBS, in Kombination mit dem Guanidin-Beschleuniger DPG (Diphenylguanidin) eingesetzt. Die Menge an DPG beträgt dabei 0 bis 5 phr, bevorzugt 0,1 bis 3 phr, besonders bevorzugt 0,5 bis 2,5 phr, ganz besonders bevorzugt 1 bis 2,5 phr.

Gemäß einer weiteren vorteilhaften Ausführungsform der Erfindung wird ein Sulfenamidbeschleuniger, besonders bevorzugt CBS, in Kombination mit Polyetheramin-Beschleunigern (beispielsweise Jeffamine^{®} D230) eingesetzt. Die Menge an Polyetheramin-Beschleunigern, beispielsweise Jeffamin^{®} D230) beträgt dabei 0,1 bis 5 phr, bevorzugt 0,1 bis 3 phr, besonders bevorzugt 0,5 bis 2,5 phr, ganz besonders bevorzugt 1 bis 2,5 phr.

Außerdem können in der Kautschukmischung Vulkanisationsverzögerer vorhanden sein. Die Begriffe "vulkanisiert" und "vernetzt" werden im Rahmen der vorliegenden Erfindung synonym verwendet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion, wie oben bereits beschrieben.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die sonstigen Bauteile eines Reifen, wie im Wesentlichen Trennplatte, Innenseele (Innenschicht), Kernprofil, Gürtel, Schulter, Gürtelprofil, Karkasse, Wulstverstärker, Wulstprofil, Hornprofil und Bandage. Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Die Erfindung soll nun anhand von Vergleichs- und Ausführungsbeispielen, die in den folgenden Tabellen zusammengefasst sind, näher erläutert werden.

Die Vergleichsmischungen sind mit V, die erfindungsgemäßen Mischungen sind mit E gekennzeichnet. Die Mengenangabe der Silane in phf bezieht sich die jeweilige Menge an Kieselsäure.

Die Mischungsherstellung erfolgte unter üblichen Bedingungen in mehreren Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Rückprallelastizität bei 70°C gemäß ISO 4662
- Konditionierte Shore-A-Härte bei Raumtemperatur in Anlehnung an DIN ISO 7619-1, zehnfach mit 5 MPa vorkonditioniert und anschließend nach ISO 868 geprüft
- Spannungswert bei 200 % und 300 % Dehnung (M200 bzw. M300) bei Raumtemperatur gemäß ISO 37
- Abrieb bei Raumtemperatur gemäß DIN/ISO 4649
- Verlustfaktor tan d, synonym zu tan 8, bei 55°C aus dynamisch-mechanischer Messung gemäß DIN 53 513

Die erfindungsgemäße Kautschukmischung zeigt im Vergleich zu den Vergleichsmischungen ein verbessertes Eigenschaftsprofil, insbesondere im Hinblick auf den Abrieb und das Rollwiderstandsverhalten und die Verstärkunsgwirkung. Dabei weist die erfindungsgemäße Kautschukmischung eine verbesserte Verstärkungswirkung auf, was an den höheren Werten für M200 und M300 und somit einer höheren Steifigkeit bei hohen Dehnungen (200 % bzw. 300 %) erkennbar ist. Damit weist die erfindungsgemäße Kautschukmischung zudem ein verbessertes Handling-Verhalten auf.

**Tabelle 1**

| **Bestandteile** | **Einheit** | **V1** | **V2** | **V3** | **E2** |
|---|---|---|---|---|---|
| NR ^{a)} | phr | 100 | 100 | 100 | 100 |
| Kieselsäure ^{b)} | phr | 46 | 46 | 37 | 37 |
| Silan ^{c)} | phf | 7,2 | - | 7,2 | - |
| Silan ^{d)} | phf | - | 7,7 | - | 7,7 |
| Ruß N339 | phr | 3 | 3 | - | - |
| Ruß N121 | phr | - | - | 12 | 12 |
| Weichmacher TDAE | phr | 3 | 3 | 3 | 3 |
| ZnO | phr | 3 | 3 | 3 | 3 |
| Zusatzstoffe ^{e)} | phr | 8 | 8 | 8 | 8 |
| Beschleuniger ^{f)} | phr | 3 | 3 | 3 | 3 |
| Schwefel | phr | 1,6 | 1,6 | 1,6 | 1,6 |

| **Eigenschaften** | | | | | |
|---|---|---|---|---|---|
| Kond. Shore Härte (RT) | Shore A | 57,5 | 58,9 | 58,9 | 65,5 |
| Rückprallelast. (70 °C) | % | 70,9 | 72,5 | 68,9 | 71,3 |
| Modul 200 (RT) | MPa | 5,5 | 7,8 | 5,8 | 10,3 |
| Modul 300 (RT) | MPa | 10,3 | 15,6 | 11,0 | 18,8 |
| Tan d | MPa | 0,077 | 0,071 | 0,088 | 0,078 |
| Abrieb | mm³ | 123 | 107 | 115 | 108 |

| | | | | | |
|---|---|---|---|---|---|
| Verwendete Substanzen ^{a} NR, TSR ^{b} Zeosil 1165MP, Fa. Rhodia, CTAB 155m²/g, BET 160 m²/g ^{c} TESPD, Fa. Evonik ^{d} Gemisch aus Silan gemäß Formel XIa) und XIb) im Verhältnis 2 zu 3 ^{e} Alterungsschutzmittel, Ozonschutzwachs, Stearinsäure ^{f} TBBS, DPG | | | | | |

## Patentansprüche

1. Schwefelvernetzbare Kautschukmischung enthaltend wenigstens folgende Bestandteile:
- wenigstens einen Dienkautschuk und
- 5 bis 500 phr wenigstens einer Kieselsäure und
- 5 bis 150 phr wenigstens eines Rußes und
- ein Gemisch der Silane B gemäß Formel XIa) und gemäß Formel XIb)

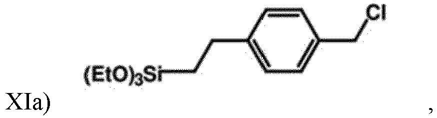

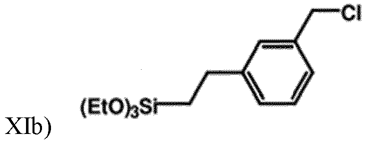

2. Kautschukmischung nach Anspruch 1, **dadurch gekennzeichnet, dass** das Gewichtsverhältnis von Kieselsäuremenge zu Rußmenge 17:1 bis 1:20 beträgt.

3. Kautschukmischung nach einem der vorherigen Ansprüche, **dadurch gekennzeichnet, dass** sie 5 bis 20 phr wenigstens eines Rußes und 10 bis 100 phr, bevorzugt 20 bis 100 phr wenigstens einer Kieselsäure enthält.

4. Kautschukmischung nach einem der vorherigen Ansprüche, **dadurch gekennzeichnet, dass** sie 0,1 bis 30 phf Silan B enthält.

5. Kautschukmischung nach einem der vorherigen Ansprüche, **dadurch gekennzeichnet, dass** sie die Silane gemäß Formel XIa) und Formel XIb) im Gewichtsverhältnis 5:1 bis 1:5 enthält

6. Kautschukmischung nach einem der vorherigen Ansprüche, **dadurch gekennzeichnet, dass** der Dienkautschuk ausgewählt ist aus der Gruppe bestehend aus natürlichem Polyisopren (NR), synthetischem Polyisopren (IR), Butadien-Kautschuk (BR), lösungspolymerisiertem Styrol-Butadien-Kautschuk (SSBR) und emulsionspolymerisiertem Styrol-Butadien-Kautschuk (ESBR).

7. Vulkanisat, welches durch die Schwefelvulkanisation wenigstens einer Kautschukmischung nach einem der Ansprüche 1 bis 6 erhalten ist.

8. Fahrzeugreifen, **dadurch gekennzeichnet, dass** er in wenigstens einem Bauteil wenigstens ein Vulkanisat nach Anspruch 7 aufweist.

9. Fahrzeugreifen nach Anspruch 8, **dadurch gekennzeichnet, dass** er wenigstens ein Vulkanisat nach Anspruch 7 im Laufstreifen aufweist.

10. Verwendung einer Kautschukmischung nach einem der Ansprüche 1 bis 6 zur Herstellung eines Gummiartikels, insbesondere einer Luftfeder, eines Balgs, Förderbands, Gurtes, Riemens, Schlauchs, Gummibands, Profils, einer Dichtung, einer Membran, taktilen Sensoren für medizinische Anwendungen oder Roboteranwendungen, oder einer Schuhsohle oder Teilen davon.

## Claims

1. Sulfur-crosslinkable rubber mixture containing at least the following constituents:
- at least one diene rubber and
- 5 to 500 phr of at least one silica and
- 5 to 150 phr of at least one carbon black and
- a mixture of silanes B of formula XIa) and of formula XIb)

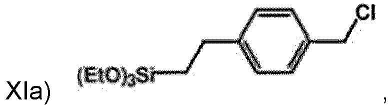

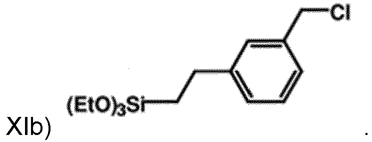

2. Rubber mixture according to Claim 1, **characterized in that** the weight ratio of the amount of silica to the amount of carbon black is 17:1 to 1:20.

3. Rubber mixture according to any of the preceding claims, **characterized in that** it contains 5 to 20 phr of at least one carbon black and 10 to 100 phr, preferably 20 to 100 phr, of at least one silica.

4. Rubber mixture according to any of the preceding claims, **characterized in that** it contains 0.1 to 30 phf of silane B.

5. Rubber mixture according to any of the preceding claims, **characterized in that** it contains the silanes according to formula XIa) and formula XIb) in the weight ratio 5:1 to 1:5.

6. Rubber mixture according to any of the preceding claims, **characterized in that** the diene rubber is selected from the group consisting of natural polyisoprene (NR), synthetic polyisoprene (IR), butadiene rubber (BR), solution-polymerized styrene-butadiene rubber (SSBR) and emulsion-polymerized styrene-butadiene rubber (ESBR).

7. Vulcanizate obtained by the sulfur vulcanization of at least one rubber mixture according to any of Claims 1 to 6.

8. Vehicle tyre, **characterized in that** it comprises at least one vulcanizate according to Claim 7 in at least one component.

9. Vehicle tyre according to Claim 8, **characterized in that** it includes at least one vulcanizate according to Claim 7 in the tread.

10. Use of a rubber mixture according to any of Claims 1 to 6 for producing a rubber article, especially an air spring, a bellows, a conveyor belt, a strap, a drive belt, a hose, a rubber band, a profile, a seal, a membrane, tactile sensors for medical applications or robotics applications, or a shoe sole or parts thereof.

## Revendications

1. Mélange de caoutchouc réticulable au soufre, contenant au moins les constituants suivants :
- au moins un caoutchouc diénique et
- 5 à 500 pcc d'au moins une silice et
- 5 à 150 pcc d'au moins une suie et
- un mélange des silanes B selon la formule XIa) et selon la formule XIb)

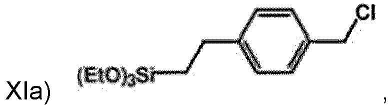

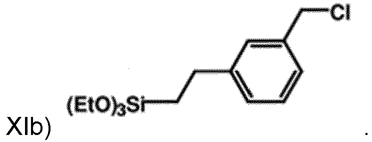

2. Mélange de caoutchouc selon la revendication 1, **caractérisé en ce que** le rapport en poids de la quantité de silice à la quantité de suie vaut 17:1 à 1:20.

3. Mélange de caoutchouc selon l'une des revendications précédentes, **caractérisé en ce qu'**il contient 5 à 20 pcc d'au moins une suie et 10 à 100 pcc, de préférence 20 à 100 pcc d'une silice.

4. Mélange de caoutchouc selon l'une des revendications précédentes, **caractérisé en ce qu'**il contient 0,1 à 30 parties par cent parties de charge en poids de silane B.

5. Mélange de caoutchouc selon l'une des revendications précédentes, **caractérisé en ce qu'**il contient les silanes selon la formule XIa) et la formule XIb) dans un rapport en poids de 5:1 à 1:5.

6. Mélange de caoutchouc selon l'une des revendications précédentes, **caractérisé en ce que** le caoutchouc diénique est choisi dans le groupe constitué par le polyisoprène naturel (NR), le polyisoprène synthétique (IR), le caoutchouc de butadiène (BR), le caoutchouc de styrène-butadiène polymérisé en solution (SSBR) et le caoutchouc de styrène-butadiène polymérisé en émulsion (ESBR).

7. Produit de vulcanisation qui est obtenu par vulcanisation par le soufre d'au moins un mélange de caoutchouc selon l'une des revendications 1 à 6.

8. Pneumatique pour véhicule, **caractérisé en ce qu'**il présente dans au moins un élément au moins un produit de vulcanisation selon la revendication 7.

9. Pneumatique pour véhicule selon la revendication 8, **caractérisé en ce qu'**il présente au moins un produit de vulcanisation selon la revendication 7 dans la bande de roulement.

10. Utilisation d'un mélange de caoutchouc selon l'une des revendications 1 à 6 pour la fabrication d'un article en caoutchouc, en particulier d'un ressort pneumatique, d'un soufflet, d'une bande transporteuse, d'une sangle, d'une courroie, d'un tuyau, d'une bande en caoutchouc, d'un profilé, d'un joint, d'une membrane, de capteurs tactiles pour des applications médicales ou robotiques ou d'une semelle de chaussure ou des parties de celle-ci.
